(19) Europäisches Patentamt
European Patent Office
Office européen des brevets

(11) EP 4 556 983 A2

(12) EUROPEAN PATENT APPLICATION

(43) Date of publication:
21.05.2025 Bulletin 2025/21

(51) International Patent Classification (IPC):
*G02B 13/00* (2006.01)

(21) Application number: 25162465.6

(52) Cooperative Patent Classification (CPC):
G02B 13/0045; G02B 13/006

(22) Date of filing: 07.03.2025

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 12.03.2024 CN 202410278693

(71) Applicant: Jiangxi OFILM Optical Co., Ltd.
Nanchang, Jiangxi 330096 (CN)

(72) Inventors:
• GUAN, Lei
Nanchang, 330096 (CN)
• WANG, Yurong
Nanchang, 330096 (CN)
• LEI, Jiao
Nanchang, 330096 (CN)
• ZHAN, Facheng
Nanchang, 330096 (CN)

(74) Representative: Metida
Gyneju str. 16
01109 Vilnius (LT)

(54) **OPTICAL LENS, IMAGE MODULE, AND TERMINAL DEVICE**

(57) An optical lens (100), an image module (200), and a terminal device (400) are provided. An optical lens (100) includes: a first lens (L1), a fourth lens (L4) and a sixth lens (L6) each having negative refractive power, and a second lens (L3), a third lens (L4), and a fifth lens (L5), each having positive refractive power. The optical lens (100) satisfies following conditional expressions: 6.5<TTL/IMGH<7.2, and 1.9<TTL/F<2.2, TTL is a distance from the object side surface (S1) of the first lens (L1) to the image plane (IMG) of the optical lens (100) along the optical axis (O), IMGH is half of an image height corresponding to the maximum field of view of the optical lens (100), and F is a focal length of the optical lens (100). The optical lens (100) can realize the miniaturization design and have high imaging quality at the same time.

Fig.1

EP 4 556 983 A2

Processed by Luminess, 75001 PARIS (FR)

## Description

FIELD

The present invention relates to field of imaging, and in particular to an optical lens, an image module, and a terminal device.

BACKGROUND

In recent years, with the development of the automotive industry, the national requirements for road traffic safety and vehicle safety have been continuously increasing. The application of ADAS (Advanced Driver Assistant System), DMS (Driver Monitoring System), and CMS (Crush Monitor System) in vehicle driving has been gradually promoted. However, under the trend of miniaturization of optical lenses, how to improve the imaging quality of optical lenses is a technical problem that needs to be urgently solved at present.

SUMMARY

According to various embodiments of the present application, an optical lens, an image module, and a terminal device are provided, which can improve the imaging quality of the optical lens while realizing the miniaturization of the optical lens.

In order to achieve the above objects, in a first aspect, the present application discloses an optical lens. The optical lens sequentially includes a first lens, a second lens, a third lens, a fourth lens, a fifth lens, a sixth lens, and an image plane along an optical axis from an object side to an imaging side.

The first lens has negative refractive power, an object side surface of the first lens is concave near the optical axis, and an imaging side surface of the first lens is convex near the optical axis.

The second lens has positive refractive power, an object side surface of the second lens is convex near the optical axis, an imaging side surface of the second lens is convex near the optical axis.

The third lens has positive refractive power, an object side surface of the third lens is convex near the optical axis, an imaging side surface of the third lens is convex near the optical axis.

The fourth lens has negative refractive power, an object side surface of the fourth lens is concave near the optical axis, an imaging side surface of the fourth lens is concave near the optical axis.

The fifth lens has positive refractive power, an object side surface of the fifth lens is convex near the optical axis, an imaging side surface of the fifth lens is convex near the optical axis.

The sixth lens has negative refractive power, an object side surface of the sixth lens is concave near the optical axis, an imaging side surface of the sixth lens is convex near the optical axis.

The optical lens satisfies following conditional expressions:
$6.5 < TTL/IMGH < 7.2$, and $1.9 < TTL/F < 2.2$.

Wherein, TTL is a distance from the object side surface of the first lens to the image plane of the optical lens along the optical axis, that is, a total optical length of the optical lens, IMGH is half of an image height corresponding to the maximum field of view of the optical lens, and F is a focal length of the optical lens.

By setting the first lens of the optical lens to have negative refractive power, it is beneficial for large-angle incident light to enter the optical lens, expanding the field of view angle range of the optical lens, thereby achieving the feature of a wide field of view. The object side surface of the first lens is concave near the optical axis and the imaging side surface is convex near the optical axis, which helps to reduce an aperture and a total optical length of the optical lens, so as to facilitate the miniaturization of the optical lens. The second and third lenses both have positive refractive power, which enables the incident light from the first lens to enter the optical lens more gently, thereby facilitating the correction of off-axis aberrations to reduce the sensitivity of the resolution variation of the optical lens and enhance the stability of the imaging effect, so that the imaging quality of the optical lens is improved. Moreover, both the object side surfaces and the imaging side surfaces of the second and third lenses are convex near the optical axis, which can provide the second and third lenses with a stronger positive refractive power, thereby further shortening the total optical length. By setting the fourth lens as a negative lens with both the object side surface and the imaging side surface concave near the optical axis, it is helpful to avoid stray light and improve the relative edge illuminance. The fifth lens has positive refractive power, and both the object side surface and imaging side surface of the fifth lens are convex near the optical axis, which is conducive to correcting edge aberrations and enhancing the resolution of the optical lens. The sixth lens has negative refractive power, with the object side surface concave and the imaging side surface convex near the optical axis, which helps to balance the difficult-to-correct aberrations caused by the convergence of incident light by the fifth lens, reduce chromatic aberration, and improve the imaging quality of the optical lens. Thus, by selecting an appropriate number of lenses and rationally configuring the refractive power and the surface shape of each lens, it is possible to achieve a miniaturized design of the optical lens while correcting the field curvature and aberrations of the optical lens and improving the resolution and the imaging clarity of the optical lens, so as to enable the optical lens to have a higher-definition imaging effect to meet people's requirements for high-definition imaging of optical lenses.

In addition, the optical lens satisfies the following expression 6.5<TTL/IMGH<7.2, which can reasonably configure a ratio of the total optical length to the image height of the optical lens, it is conducive to shortening the total optical length of the optical lens while ensuring good imaging quality, thereby achieving a miniaturized design. Exceeding the upper limit of the above conditional expression, the total optical length of the optical lens is too long, which is not conducive to the realization of a miniaturized design. Below the lower limit of the above conditional expression, the total optical length of the optical system is too short, the surface shape of the lenses in the optical lens may be easy to be too complex, which reduce the production yield of the optical lens, and at the same time, it is easy to reduce the ability of the optical lens to correct aberrations, resulting in a decline in imaging quality.

At the same time, the optical lens further satisfies the following expression 1.9<TTL/F<2.2, which can reasonably control the focal length of the optical lens and the total optical length of the optical lens, and not only achieve the miniaturization of the optical lens, but also help to better converge the light on the image plane. Exceeding the upper limit of the above conditional expression, the total optical length of the optical lens is too long relative to the focal length of the optical lens, resulting in a large angle of the main light of the light entering the image plane, and the edge light of the optical lens cannot be imaged on the image plane, which leads to incomplete imaging information, reduces the imaging quality, and is not conducive to the realization of the miniaturization design of the optical lens. Below the lower limit of the above conditional expression, the total length of the optical lens is too short relative to the focal length of the optical lens, which is easy to increase the sensitivity of the optical lens and is not conducive to the convergence of light on the image plane.

In a second aspect, the present application discloses an image module. The image module includes an image sensor and the above-mentioned optical lens, the image sensor is arranged on the imaging side of the optical lens. The image module with the above-mentioned optical lens can improve the imaging quality while realizing the miniaturization design.

In a third aspect, the present application discloses a terminal device. The terminal device includes a fixing member and the above-mentioned image module, the image module is arranged on the fixing member. The terminal device with the above-mentioned image module can improve the imaging quality while realizing the miniaturization design.

BRIEF DESCRIPTION OF THE DRAWINGS

To better describe and illustrate embodiments and/or examples of those inventions disclosed herein, reference may be made to one or more of the accompanying drawings. The additional details or examples used to describe the drawings should not be construed as limiting the scope of any of the disclosed inventions, the embodiments and/or examples presently described, and the best modes currently understood of these inventions.

FIG. 1 is a schematic structure diagram of an optical lens of a first embodiment of the present application.
FIG. 2 is a longitudinal spherical aberration diagram, astigmatism curve diagram and distortion diagram of the optical lens of the first embodiment of the present application.
FIG. 3 is a schematic structure diagram of an optical lens of a second embodiment of the present application.
FIG. 4 is a longitudinal spherical aberration diagram, astigmatism curve diagram and distortion diagram of the optical lens of the second embodiment of the present application.
FIG. 5 is a schematic structure diagram of an optical lens of a third embodiment of the present application.
FIG. 6 is a longitudinal spherical aberration diagram, astigmatism curve diagram and distortion diagram of the optical lens of the third embodiment of the present application.
FIG. 7 is a schematic structure diagram of an optical lens of a fourth embodiment of the present application.
FIG. 8 is a longitudinal spherical aberration diagram, astigmatism curve diagram and distortion diagram of the optical lens of the fourth embodiment of the present application.
FIG. 9 is a schematic structure diagram of an optical lens of a fifth embodiment of the present application.
FIG. 10 is a longitudinal spherical aberration diagram, astigmatism curve diagram and distortion diagram of the optical lens of the fifth embodiment of the present application.
FIG. 11 is a schematic diagram of an image module of an embodiment of the present application.
FIG. 12 is a schematic diagram of a terminal device of an embodiment of the present application.

DETAILED DESCRIPTION

In order to facilitate understanding of the present invention, the present invention will be described more fully below with reference to the relevant drawings. Preferred embodiments of the invention are shown in the accompanying drawings. However, the invention may be embodied in many different forms and is not limited to the embodiments described herein. Rather, these embodiments are provided so that a thorough understanding of the disclosure of the present invention will be provided.

It should be noted that when a component is referred to as being "fixed to" another component, the component can be directly on another component or a middle component may exist therebetween. When a component is considered to be "connected" to another component, the component can be directly connected to another component or a middle component may exist therebetween. The term "inner", "outer", "left", "right" and similar expressions used herein are for illustrative purposes only and do not represent the only implementation manner.

In some embodiments of the present application, an optical lens is provided. The optical lens has a total of six lenses with refraction power, which are a first lens, a second lens, a third lens, a fourth lens, a fifth lens, and a sixth lens along an optical axis from an object side to an imaging side. The optical lens further includes an image plane, the image plane and the sixth lens are arranged along the optical axis, and the image plane is located on a side of the sixth lens facing away from the fifth lens. During imaging, light enters the first lens, the second lens, the third lens, the fourth lens, the fifth lens, and the sixth lens in that sequence from the object side of the first lens and finally forms an image on the image plane of the optical lens.

Further, the first lens has negative refractive power, the second lens has positive refractive power, the third lens has positive refractive power, the fourth lens has negative refractive power, the fifth lens has positive refractive power, and the sixth lens has negative refractive power.

Further, an object side surface of the first lens is concave near the optical axis, and an imaging side surface of the first lens is convex near the optical axis. An object side surface of the second lens is convex near the optical axis, and an imaging side surface of the second lens is convex near the optical axis. An object side surface of the third lens is convex near the optical axis, and an imaging side surface of the third lens is convex near the optical axis. An object side surface of the fourth lens is concave near the optical axis, and an imaging side surface of the fourth lens is concave near the optical axis. An object side surface of the fifth lens is convex near the optical axis, and an imaging side surface of the fifth lens is convex near the optical axis. An object side surface of the sixth lens is concave near the optical axis, and an imaging side surface of the sixth lens is convex near the optical axis.

By setting the first lens of the optical lens to have negative refractive power, it is beneficial for large-angle incident light to enter the optical lens, expanding the field of view angle range of the optical lens, thereby achieving the feature of a wide field of view. The object side surface of the first lens is concave near the optical axis and the imaging side surface is convex near the optical axis, which helps to reduce an aperture and a total optical length of the optical lens, so as to facilitate the miniaturization of the optical lens. The second and third lenses both have positive refractive power, which enables the incident light from the first lens to enter the optical lens more gently, thereby facilitating the correction of off-axis aberrations to reduce the sensitivity of the resolution variation of the optical lens and enhance the stability of the imaging effect, so that the imaging quality of the optical lens is improved. Moreover, both the object side surfaces and the imaging side surfaces of the second and third lenses are convex near the optical axis, which can provide the second and third lenses with a stronger positive refractive power, thereby further shortening the total optical length. By setting the fourth lens as a negative lens with both the object side surface and the imaging side surface concave near the optical axis, it is helpful to avoid stray light and improve the relative edge illuminance. The fifth lens has positive refractive power, and both the object side surface and the imaging side surface of the fifth lens are convex near the optical axis, which is conducive to correcting edge aberrations and enhancing the resolution of the optical lens. The sixth lens has negative refractive power, with the object side surface concave and the imaging side surface convex near the optical axis, which helps to balance the difficult-to-correct aberrations caused by the convergence of incident light by the fifth lens, reduce chromatic aberration, and improve the imaging quality of the optical lens. Thus, by selecting an appropriate number of lenses and rationally configuring the refractive power and the surface shape of each lens, it is possible to achieve a miniaturized design of the optical lens while correcting the field curvature and aberrations of the optical lens and improving the resolution and the imaging clarity of the optical lens, so as to enable the optical lens to have a higher-definition imaging effect to meet people's requirements for high-definition imaging of optical lenses.

Further, in some embodiments, the material of each lens of the optical lens is glass to ensure good optical performance of the optical lens and reduce the temperature drift sensitivity of the optical lens. In some other embodiments, the material of each lens of the optical lens is plastic to reduce the weight of the optical lens and lower the cost. Alternatively, it can be understood that the material of each lens of the optical lens can be specifically selected according to actual needs, for example, all lenses are made of plastic, or all are made of glass, or lenses of different materials are used in combination, so that the optical lens has a low temperature drift sensitivity while the overall weight is relatively light. No specific limitations of the lenses are made here.

Spherical lens has the advantages of simple manufacturing process and low production cost, and can be convenient to flexibly design the surface shape of the lens to enhance the imaging resolution of the optical lens. Aspheric lenses can provide more flexible design for the object side surface or the imaging side surface of the lens, so that the lens can effectively address issues such as unclear imaging, distorted field of view, or narrow field of view even when the lens is small and thin, and the optical lens can achieve good imaging quality without requiring a large number of lenses, which is beneficial for shortening the length of the optical lens. Based on this, in some embodiments, the third lens can be an aspheric lens, while the first lens, the second lens, the fourth lens, the fifth lens, and the sixth lens are spherical lenses. In this way, the combination of spherical and aspheric designs can not only improve the processability of each lens to facilitate the surface shape design, but also provide more flexible design for the object side surface or the imaging side surface of the lens, so that each lens can allow to effectively address issues such as unclear imaging, distorted field of view, or narrow field of view even when the lens is small and thin. Moreover, the optical lens can achieve good imaging quality without requiring a large number of lenses, which is beneficial for shortening the length of the optical lens. It is understood that in other embodiments, the surfaces of each lens in the optical lens may all be spherical, all aspheric, or any combination of spherical and aspheric, and the specific choice can be made according to actual needs, so no specific limitations are made in this application.

In some embodiments, the optical lens may further include an aperture, the aperture may include an aperture stop and/or a field stop. For example, the aperture can be an aperture stop, or the aperture can be a field stop, or the aperture can include an aperture stop and a field stop. By arranging the aperture between the imaging side surface of the first lens and the object side surface of the second lens, the exit pupil can be deployed away from the imaging plane, the effective diameter of the optical lens can also be reduced without reducing the telecentricity of the optical lens, thereby achieving miniaturization. It is understood that in other embodiments, the aperture can also be arranged between other lenses, and the location of the aperture can be adjusted according to the actual situation, no specific limitations are made in this embodiment.

In some embodiments, the optical lens may further include a filter, the filter may be arranged between the sixth lens and the image plane. In some embodiments, the filter may be an infrared cut-off filter to filter infrared light, and the imaging is more in line with the visual experience of the human eye through visible light, so that the imaging quality can be improved. In some embodiments, the filter may be an infrared bandpass filter to allow infrared light to pass through and to reflect visible light to achieve infrared imaging of the optical lens, so that the optical lens can image in a low light environment or special application scenarios and obtain better imaging quality. It is understood that the filter may be made of plastic, or optical glass with coating, or other materials, the material of the filter may be selected according to actual needs, in this application is not specified.

In some embodiments, the optical lens may further include a protective glass. The protective glass may be arranged between the filter and the image plane of the optical lens, thus protecting an image sensor and providing dust protection to the image sensor. The protective glass may be made of plastic, or optical glass with coating, or other materials, the material of the protective glass may be selected according to actual needs, in this application is not specified. It is understood that the protective glass can be part of the optical lens or can be removed from the optical lens, but when the protective glass is removed, the total optical length of the optical lens remains unchanged.

In some embodiments, the optical lens may satisfy the following conditional expression: $6.5 < TTL/IMGH < 7.2$. Wherein, TTL is a distance from the object side surface of the first lens to the image plane of the optical lens along the optical axis, that is, a total optical length of the optical lens, and IMGH is half of an image height corresponding to the maximum field of view of the optical lens.

Reasonable arrangement of a ratio of the total optical length to the image height of the optical lens can shorten the total optical length of the optical lens and realize the miniaturization design while ensuring good imaging quality. Exceeding the upper limit of the above conditional expression, the total optical length of the optical lens is too long, which is not conducive to the realization of a miniaturized design. Below the lower limit of the above conditional expression, the total optical length of the optical system is too short, the surface shape of the lenses in the optical lens may be easy to be too complex, which reduce the production yield of the optical lens, and at the same time, it is easy to reduce the ability of the optical lens to correct aberrations, resulting in a decline in imaging quality.

In some embodiments, the optical lens may satisfy the following conditional expression: $1.9 < TTL/F < 2.2$. Wherein, TTL is the distance from the object side surface of the first lens to the image plane of the optical lens along the optical axis, and F is a focal length of the optical lens.

By reasonably controlling the focal length of the optical lens and the total optical length of the optical lens, not only the miniaturization of the optical lens can be achieved, but also the light can be better converged on the image plane. Exceeding the upper limit of the above conditional expression, the total optical length of the optical lens is too long relative to the focal length of the optical lens, resulting in a large angle of the main light of the light entering the image plane, and the edge light of the optical lens cannot be imaged on the image plane, which leads to incomplete imaging information, reduces the imaging quality, and is not conducive to the realization of the miniaturization design of the optical lens. Below the lower limit of the above conditional expression, the total length of the optical lens is too short relative to the focal length of the optical lens, which is easy to increase the sensitivity of the optical lens and is not conducive to the convergence of light on the image plane.

In some embodiments, the optical lens may satisfy the following conditional expression: $0.5 < CT23/CT2 < 1.2$. Wherein, CT2 is a thickness of the second lens at the optical axis, and CT23 is a distance between the second lens and the third lens at the optical axis.

When the above conditional expression is satisfied, an air gap between the second lens and the third lens at the optical axis can effectively avoid being too large, on the one hand, it is conducive to the correction of the aberration of the optical lens, thereby improving the imaging quality of the optical lens, on the other hand, it provides space for the structure of an outside diameter of a non-effective imaging region of the second lens and the rationality of the second lens, and ensures the overall feasibility in the small size of the mirror barrel.

In some embodiments, the optical lens may satisfy the following conditional expression: 0.8<CT56/CT6<3. Wherein, CT6 is a thickness of the sixth lens at the optical axis, and CT56 is a distance between the fifth lens and the sixth lens at the optical axis.

When the above conditional expression is satisfied, an air gap between the fifth lens and the sixth lens at the optical axis can effectively avoid being too large, on the one hand, it is conducive to the correction of the aberration of the optical lens, thereby improving the imaging quality of the optical lens, on the other hand, it provides space for the structure of an outside diameter of a non-effective imaging region of the sixth lens and the rationality of the sixth lens, and ensures the overall feasibility in the small size of the mirror barrel.

In some embodiments, the optical lens may satisfy the following conditional expression: 1.5<CT2/ET2<2.1. Wherein, CT2 is the thickness of the second lens at the optical axis, and ET2 is a thickness of an edge of the second lens, that is, a distance between the maximum effective aperture of the object side surface of the second lens and the maximum effective aperture of the imaging side surface of the second lens in a direction of the optical axis.

When the above conditional expression is satisfied, a thickness ratio between the thickest part and the thinest part of the second lens can be reasonably controlled, and the processing difficulty of the lens can be reduced. Exceeding the upper limit of the above conditional expression, the thickness ratio of the second lens is large, and because the lens is meniscus type, it is difficult to process and form the lens. Below the lower limit of the above conditional expression, the thickness ratio of the second lens is small, which reduces the converging ability of the second lens to the light, thereby resulting in a longer total optical length of the optical lens, which is not conducive to the miniaturization of the optical lens.

In some embodiments, the optical lens may satisfy the following conditional expression: 5<SD3/(SAG3-SAG4)<40. Wherein, SD3 is half of the maximum effective aperture of the object side surface of the second lens. SAG3 is a vector height at the maximum effective aperture of the object side surface of the second lens, that is, a distance between an intersection point of the object side surface of the second lens and the optical axis to the maximum effective aperture of the object side surface of the second lens in the direction of the optical axis. SAG4 is a vector height at the maximum effective aperture of the imaging side surface of the second lens, that is, a distance between an intersection point of the imaging side surface of the second lens and the optical axis and the maximum effective aperture of the imaging side surface of the second lens in the direction of the optical axis.

When the above conditional expression is satisfied, the surface shapes of the object side surface and the imaging side surface may be reasonably configured, which can better correct aberrations, effectively control the manufacturing and assembly tolerances of the second lens, reduce the assembly sensitivity of the optical lens, and improve the assembly yield of the optical lens.

In some embodiments, the optical lens may satisfy the following conditional expression: 1.4<F/F2345<1.8. Wherein, F is the focal length of the optical lens, and F2345 is a combined focal length of the second lens, the third lens, the fourth lens and the fifth lens.

By reasonably arranging a focal length ratio of the combined focal length of the second lens to the fifth lens in the whole optical lens, it is beneficial to correct the spherical aberration and the field curvature of the optical lens, and improve the imaging quality of the optical lens.

In some embodiments, the optical lens may satisfy the following conditional expression: 5<IF34/FI<35. Wherein, F is the focal length of the optical lens, and F34 is a combined focal length of the third lens and the fourth lens.

By reasonably arranging a ratio of the combined focal length of the third lens and the fourth lens to the focal length of the optical lens, it is conducive to correcting the aberration caused by the light passing through the lenses before the fourth lens and improving the resolution of the optical lens, at the same time, it is also conducive to reducing an exit angle of the light after being turned by the optical lens and entering the image sensor on the imaging side surface of the image module at a smaller angle, so that the photosensitive performance of the image sensor is improved, and the imaging quality of the camera module is improved.

In some embodiments, the optical lens may satisfy the following conditional expression: 5mm<F6*BFL/R11<7mm. Wherein, F6 is a focal length of the sixth lens, BFL is a distance between the imaging side surface of the sixth lens and the image plane of the optical lens at the optical axis, that is, a rear focal, and R11 is a radius of curvature of the object side surface of the sixth lens at the optical axis.

By reasonably arranging the focal length of the sixth lens, the rear focal of the optical lens and the radius of curvature of the sixth lens, the ghost image risk caused by the sixth lens may be effectively reduced.

In some embodiments, the optical lens may satisfy the following conditional expression: 1.1<CT4/CT3<1.9. Wherein, CT3 is a thickness of the third lens at the optical axis, and CT4 is a thickness of the fourth lens at the optical axis.

By reasonably arranging the thickness of the third lens at the optical axis and the thickness of the fourth lens at the optical axis, and controlling a thickness difference between the third lens and the fourth lens in a suitable range, it is helpful to the cementing of the third lens and the fourth lens, and prevent the phenomenon of cracking and degumming caused by the deformation quantity of the lens from being too large due to an excessive thickness difference in a high and low temperature environment.

In some embodiments, the optical lens may satisfy the following conditional expression: 20<VD3-VD4<35. Wherein, VD3 is an Abbe number of the third lens and VD4 is an Abbe number of the fourth lens.

When the above conditional expression is satisfied, it is beneficial to effectively correct the chromatic aberration of the optical lens and effectively improve the performance of the optical lens.

In some embodiments, the optical lens may satisfy the following conditional expression: 0.2 mm*$10^{-6}$/°C<(CT3-CT4)*(TCE3-TCE4)<0.8 mm*$10^{-6}$/°C. Wherein, CT3 is the thickness of the third lens at the optical axis, CT4 is the thickness of the fourth lens at the optical axis, TCE3 is a coefficient of thermal expansion of the third lens, and TCE4 is a coefficient of thermal expansion of the fourth lens.

When the above conditional expression is satisfied, the center thickness difference and the material difference of the third lens and the fourth lens can be reasonably arranged, which is conducive to ensuring the imaging performance of the optical lens under high and low temperature conditions.

Further, the third lens and the fourth lens may be cemented, one of the third lens and the fourth lens has negative refractive power, and the other has positive refractive power, which is conducive to mutually correcting the aberration of the optical lens.

In some embodiments, the optical lens may satisfy the following conditional expression: 1<SD9/SD11<1.1. Wherein, SD9 is half of the maximum effective aperture of the object side surface of the fifth lens, and SD11 is half of the maximum effective aperture of the object side surface of the sixth lens.

When the above conditional expression is satisfied, a ratio of the effective aperture of the object side surface of the fifth lens to the effective aperture of the object side surface of the sixth lens can be reasonably arranged, which is conducive to the gathering and convergence of the incident light, so that it is conducive to shortening the total length of the optical lens and realizing the miniaturization design. At the same time, it is also conducive to the spreading of the light toward the imaging side surface of the sixth lens, which is conducive to the realization of the characteristics of the large image surface of the optical lens, thus, it is beneficial to the matching of the optical lens and the image sensor, and at the same time, it is beneficial to avoid introducing excessive aberration.

In some embodiments, the optical lens may satisfy the following conditional expression: - 2.6<SAG11/-SAG9<-2.2. Wherein, SAG9 is a vector height at the maximum effective aperture of the object side surface of the fifth lens, that is, a distance between an intersection point of the object side surface of the fifth lens and the optical axis to the maximum effective aperture of the object side surface of the fifth lens in the direction of the optical axis, SAG11 is a vector height at the maximum effective aperture of the object side surface of the sixth lens, that is, a distance between an intersection point of the object side surface of the sixth lens and the optical axis to the maximum effective aperture of the object side surface of the sixth lens in the direction of the optical axis. In some embodiments, the optical lens satisfies the following conditional expression: - 2.5<SAG11/SAG9<-2.3.

When the above conditional expression is satisfied, a difference in curvature degree between the object side surface of the fifth lens and the object side surface of the sixth lens is not too large, and the sixth lens can better correct the aberration such as the spherical aberration and the field curvature generated by the front lenses, so that the optical lens has better imaging effect.

In some embodiments, the optical lens may satisfy the following conditional expression: 1<SD1/IMGH<1.3. Wherein, SD1 is half of the maximum effective aperture of the object side surface of the first lens, and IMGH is half of the image height corresponding to the maximum field of view of the optical lens. In some embodiments, the optical lens satisfies the following conditional expression: 1.05<SD1/IMGH<1.22.

By reasonably arranging a ratio of the maximum effective aperture of the object side surface of the first lens to the image height of the optical lens, it is beneficial to help the optical lens adapt to a larger image sensor under a smaller space limitation, so as to improve the imaging quality of the optical lens, at the same time, the limitation of the above conditional expression is conducive to make the most of an internal space of the first lens, and then improve the compactness of the optical lens to achieve the miniaturization design of the optical lens.

In some embodiments, the optical lens may satisfy the following conditional expression: 15mm<SD1/TAN(FOV/2)-SAG1<17.5mm. Wherein, SD1 is half of the maximum effective aperture of the object side surface of the first lens, FOV is the maximum field of view of the optical lens, SAG1 is a vector height at the maximum effective aperture of the object side surface of the first lens, that is, a distance between an intersection point of the object side surface of the first lens and the optical axis to the maximum effective aperture of the object side surface of the first lens in the direction of the optical axis.

When the above conditional expression is satisfied, it is conducive to restricting a depth of the viewpoint of the optical lens, effectively avoiding the light block of the mechanism, and meeting the needs of the field of view and the aperture of the objects side surface of the optical lens.

Fn is defined as an effective focal length of the N-th lens, CTn is defined as a thickness of the N-th lens at the optical axis, R2n-1 is defined as a radius of curvature of the object side surface of the N-th lens at the optical axis, R2n is defined as a radius of curvature of the imaging side surface of the N-th lens at the optical axis, wherein n is any integer from 1 to 6. Specifically, the effective focal length of the first lens is F1, the thickness of the first lens at the optical axis is CT1, the radius of curvature of the object surface of the first lens at the optical axis is R1, the radius of curvature of the imaging side surface of the first lens at the optical axis is R2, and so on.

In some embodiments, the optical lens may satisfy at least one of the following conditional expressions: 2.5<R2/R1<5, -2<R4/R3<-1, -2<R6/R5<-0.5, -2<R7/R8<-1, -2.2<R10/R9<-1.5, and R12/R11<30.

By controlling a ratio of the radius of curvature of the object side surface and the imaging side surface of the lens at the optical axis within a reasonable range, it is beneficial to control the surface shape of the lens, which is beneficial to correct the astigmatism, the field curvature and the distortion of the optical lens, compress the total optical length of the optical lens, and realize the design requirements of the thin and miniaturized optical lens.

In some embodiments, the optical lens may satisfy the following conditional expression: 30deg<FOV<40deg. Wherein, FOV is the maximum field of view of the optical lens. In some embodiments, the optical lens satisfies the following conditional expression: 33deg<FOV<36deg.

By reasonably arranging the maximum field of view of the optical lens, it is beneficial to effectively improve a viewing area of the optical lens, so as to achieve the telephoto effect of the optical lens.

In some embodiments, the optical lens may satisfy the following conditional expression: 1.5<FNO<1.7. Wherein, FNO is an aperture number of the optical lens. In some embodiments, the optical lens satisfies the following conditional expression: 1.55<FNO<1.65.

By reasonably arranging the aperture number of the optical lens, the optical lens may have a large aperture, which is conducive to helping the optical lens to have a good diffraction limit, excellent relative illumination and excellent image resolution.

In some embodiments, the optical lens may satisfy at least one of the following conditional expressions: -7<F1/CT1<-4.5, 2<F2/CT2<3.5, 2.5<F3/CT3<4, -2<F4/CT4<-1, 5<F5/CT5<9, and -30<F6/CT6<-10.

By rationally arranging a ratio of the focal length to the thickness at the optical axis of each lens, it is helpful to reduce a tolerance sensitivity of the thickness of each lens at the optical axis in the optical lens, and thereby helping to reduce the processing difficulty of each lens and improve the assembly yield of the optical lens, so that the production cost is reduced.

The surface shape of each aspherical lens can be defined by, but not limited to, the following aspherical formula:

$$Z = \frac{cr^2}{1 + \sqrt{1 - (k+1)c^2r^2}} + \sum Air^i$$

Wherein, Z is a height distance along the optical axis from a position of the aspheric surface at height r to the vertex of the aspheric surface; c is a curvature of the vertex of the aspheric surface, and c=1/Y, Y is the radius of curvature (that is, the curvature of the vertex of the aspheric surface c is the reciprocal of the Y radius in the Table 1); k is the cone coefficient; Ai is the coefficient corresponding to the i-th higher-order term of the aspheric surface.

The optical lens of the present disclosure will be described in detail below with reference to specific parameters.

First embodiment

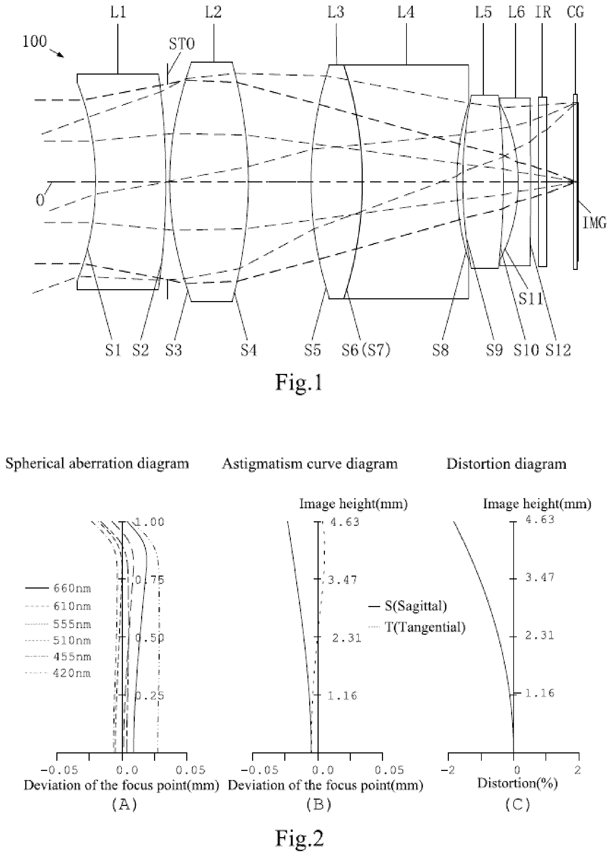

FIG. 1 is a schematic structural diagram of the optical lens 100 of the first embodiment, the optical lens 100 sequentially includes a first lens L1, an aperture STO, a second lens L2, a third lens L3, a fourth lens L4, a fifth lens L5, and a sixth lens L6 along an optical axis O from an object side to an imaging side. The materials of the first lens L1, the second lens L2, the third lens L3, the fourth lens L4, the fifth lens L5, and the sixth lens L6 can be found in Table 1.

Further, the first lens L1 has negative refractive power, the second lens L2 has positive refractive power, third lens L3 has positive refractive power, the fourth lens L4 has negative refractive power, the fifth lens L5 has positive refractive power, and the sixth lens L6 has negative refractive power.

Furthermore, an object side surface S1 of the first lens L1 is concave near the optical axis O, an imaging side surface S2 of the first lens L1 is convex near the optical axis O, an object side surface S3 of the second lens L2 is convex near the optical axis O, an imaging side surface S4 of the second lens L2 is convex near the optical axis O, an object side surface S5 of the third lens L3 is convex near the optical axis O, an imaging side surface S6 of the third lens L3 is convex near the optical axis O, an object side surface S7 of the fourth lens L4 is concave near the optical axis O, an imaging side surface S8 of the fourth lens L4 is concave near the optical axis O, an object side surface S9 of the fifth lens L5 is convex near the optical axis O, an imaging side surface S10 of the fifth lens L5 is convex near the optical axis O, an object side surface S11 of the sixth lens L6 is concave near the optical axis O, and an imaging side surface S12 of the sixth lens L6 is concave near the optical axis O.

Taking a focal length F=15.25mm of the optical lens 100, an aperture number FNO=1.6 of the optical lens 100, the maximum field of view FOV=33.2deg of the optical lens 100, and a total optical length TTL=33.069mm of the optical lens 100 as an example, other parameters of the optical lens 100 are given in Table 1 and Table 2. Wherein, the elements from the object surface to the imaging surface along the optical axis O of the optical lens 100 are arranged in sequence according to the order of the elements from top to bottom in Table 1. In the same lens, a surface with a smaller surface number is the object side surface, a surface with a larger surface number is the imaging side surface, for example, the surface number S1 and the surface number S2 are the object side surface S1 and the imaging side surface S2 of the first lens L1. The Y radius in Table 1 is the radius of curvature of the object side surface or the imaging side surface of the corresponding surface number at the optical axis O. The first value in the "Thickness" parameter column of a lens is the thickness of the lens at the optical axis O, and the second value is a distance from the imaging side surface of the lens to a rear surface in an imaging side direction on the optical axis O. The value of the aperture STO in the "Thickness" parameter column is a distance from the aperture STO to a vertex of a latter surface in an imaging side direction (the vertex refers to an intersection of the latter surface and the optical axis O) on the optical axis O, and by default, a direction from the object side surface of the first lens L1 to the imaging side surface of the last lens is a positive direction of the optical axis O. When the value of the aperture STO in the "Thickness" parameter column is negative, it means that the aperture STO is arranged on the imaging side of the vertex of the latter surface. When the value of the aperture STO in the "Thickness" parameter column is a positive value, the aperture STO is arranged on the object side of the vertex of the latter surface. It can be understood that the units of the Y radius, the thickness, and the focal length in Table 1 are all mm, the reference wavelength for the refractive index and Abbe number of each lens in Table 1 is 587.56nm, and the reference wavelength for the focal length of each lens in Table 1 is 555nm.

In the Table 2, k is the cone coefficient. Table 2 shows the higher-order term coefficients A4, A6, A8, A10, A12, A14, and A16 that can be used for each aspherical lens in the first embodiment.

Table 1

| First embodiment | | | | | | | | |
|---|---|---|---|---|---|---|---|---|
| F=15.25mm, FNO=1.6, FOV=33.2deg, TTL=33.069mm | | | | | | | | |
| Surface number | Name Object side | Surface type sphere | Y radius infinity | Thickness infinity | Material | Refractive index | Abbe number | Focal length |
| 1 | First lens | sphere | -13.863 | 4.820 | glass | 1.804 | 46.568 | -29.227 |
| 2 | | sphere | -38.861 | 0.112 | | | | |
| 3 | Aperture STO | sphere | infinity | 0.151 | | | | |
| 4 | Second lens | asphere | 15.599 | 5.376 | glass | 1.619 | 63.855 | 15.167 |
| 5 | | asphere | -20.585 | 4.298 | | | | |
| 6 | Third lens | sphere | 18.810 | 3.521 | glass | 1.755 | 52.337 | 12.940 |
| 7 | | sphere | -18.810 | 0.000 | | | | |
| 8 | Fourth lens | sphere | -18.810 | 6.459 | glass | 1.741 | 27.762 | -9.603 |
| 9 | | sphere | 13.240 | 0.406 | | | | |
| 10 | Fifth lens | sphere | 21.949 | 2.793 | glass | 1.804 | 46.568 | 17.405 |
| 11 | | sphere | -36.772 | 1.020 | | | | |
| 12 | Sixth lens | sphere | -8.807 | 0.850 | glass | 1.613 | 44.167 | -14.973 |
| 13 | | sphere | -204.542 | 0.563 | | | | |
| 14 | Filter IR | sphere | infinity | 0.550 | glass | 1.517 | 64.212 | |
| 15 | | sphere | infinity | 1.805 | | | | |
| 16 | Protective glass CG | sphere | infinity | 0.300 | glass | 1.517 | 64.212 | |
| 17 | | sphere | infinity | 0.045 | | | | |

(continued)

| First embodiment | | | | | | | | |
|---|---|---|---|---|---|---|---|---|
| F=15.25mm, FNO=1.6, FOV=33.2deg, TTL=33.069mm | | | | | | | | |
| Surface number | Name Object side | Surface type sphere | Y radius infinity | Thickness infinity | Material | Refractive index | Abbe number | Focal length |
| 18 | Imaging plane IMG | sphere | infinity | 0.000 | | | | |

Table 2

| First embodiment | | | |
|---|---|---|---|
| Aspheric coefficient | | | |
| Surface number | k | A4 | A6 | A8 |
| 4 | 4.60977E-01 | -7.35518E-05 | 6.31473E-07 | -7.83765E-08 |
| 5 | -1.21355E+00 | 3.43774E-05 | 7.37281E-07 | -9.46567E-08 |
| Surface number | A10 | A12 | A14 | A16 |
| 4 | 3.97673E-09 | -1.14427E-10 | 1.72350E-12 | -1.08389E-14 |
| 5 | 5.04902E-09 | -1.46521E-10 | 2.15729E-12 | -1.28526E-14 |

Referring to (A) of FIG. 2, (A) of FIG. 2 shows a longitudinal spherical aberration diagram of the optical lens 100 in the first embodiment at wavelengths of 660 nm, 610 nm, 555 nm, 510 nm, 455 nm, and 420 nm. Wherein, the abscissa along the X-axis direction represents the deviation of the focus point in mm, and the ordinate along the Y-axis direction represents the normalized field of view. It can be seen from (A) in Figure 2 that the spherical aberration value of the optical lens 100 in the first embodiment is well, indicating that the imaging quality of the optical lens 100 in this embodiment is well.

Referring to (B) of FIG. 2, (B) of FIG. 2 is an astigmatism curve diagram of the optical lens 100 in the first embodiment at a wavelength of 555 nm. Wherein, the abscissa along the X-axis direction represents the deviation of the focus point in mm, and ordinate along the Y-axis direction represents the image height in mm. T in the astigmatism curve diagram represents the curvature of the image plane IMG in the tangential direction, and S represents the curvature of the image plane IMG in the sagittal direction. It can be seen from (B) of FIG. 2 that at this wavelength, astigmatism of the optical lens 100 is well compensated.

Referring to (C) of FIG. 2, (C) of FIG. 2 is a distortion diagram of the optical lens 100 in the first embodiment at a wavelength of 555 nm. Wherein, the abscissa along the X-axis direction represents the distortion, and the ordinate along the Y-axis direction represents the image height in mm. It can be seen from (C) of FIG. 2 that at this wavelength, the distortion of the optical lens 100 is well corrected.

Second embodiment

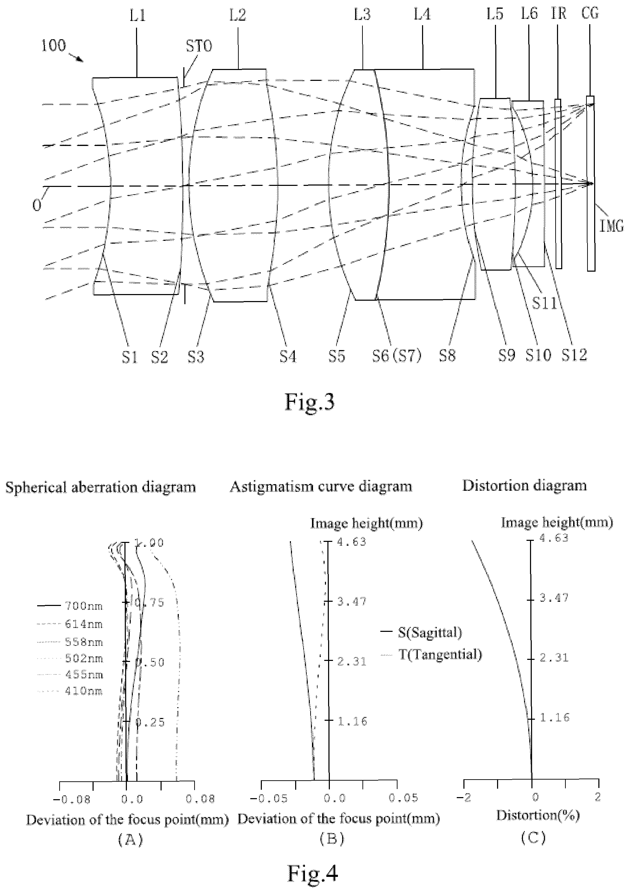

FIG. 3 is a schematic structural diagram of the optical lens 100 of the second embodiment, the optical lens 100 sequentially includes a first lens L1, an aperture STO, a second lens L2, a third lens L3, a fourth lens L4, a fifth lens L5, and a sixth lens L6 along an optical axis O from an object side to an imaging side. The materials of the first lens L1, the second lens L2, the third lens L3, the fourth lens L4, the fifth lens L5, and the sixth lens L6 can be found in Table 3.

Further, the first lens L1 has negative refractive power, the second lens L2 has positive refractive power, third lens L3 has positive refractive power, the fourth lens L4 has negative refractive power, the fifth lens L5 has positive refractive power, and the sixth lens L6 has negative refractive power.

Furthermore, an object side surface S1 of the first lens L1 is concave near the optical axis O, an imaging side surface S2 of the first lens L1 is convex near the optical axis O, an object side surface S3 of the second lens L2 is convex near the optical axis O, an imaging side surface S4 of the second lens L2 is convex near the optical axis O, an object side surface S5 of the third lens L3 is convex near the optical axis O, an imaging side surface S6 of the third lens L3 is convex near the optical axis O, an object side surface S7 of the fourth lens L4 is concave near the optical axis O, an imaging side surface S8 of the fourth lens L4 is concave near the optical axis O, an object side surface S9 of the fifth lens L5 is convex near the optical axis O, an imaging side surface S10 of the fifth lens L5 is convex near the optical axis O, an object side surface S11 of the sixth lens L6 is concave near the optical axis O, and an imaging side surface S12 of the sixth lens L6 is concave near the optical axis O.

Taking a focal length F=15.24mm of the optical lens 100, an aperture number FNO=1.6 of the optical lens 100, the maximum field of view FOV=35.4deg of the optical lens 100, and a total optical length TTL=33.163mm of the optical lens 100 as an example. The reference wavelength for the refractive index and Abbe number of each lens in Table 3 is 587.56nm, and the reference wavelength for the focal length of each lens in Table 3 is 558nm. Other parameters of the second embodiment are given in Table 3 and Table 4, and the definition of each parameter can be obtained from the description of the foregoing embodiment and will not be described again here.

Table 3

| Surface number | Name | Surface type | Y radius | Thickness | Material | Refractive index | Abbe number | Focal length |
|---|---|---|---|---|---|---|---|---|
| | Second embodiment | | | | | | | |
| | F=15.24mm, FNO=1.6, FOV=35.4deg, TTL=33.163mm | | | | | | | |
|  | Object side | sphere | infinity | infinity |  |  |  |  |
| 1 | First lens | sphere | -14.130 | 4.938 | glass | 1.804 | 46.568 | -23.917 |
| 2 |  | sphere | -61.008 | 0.104 |  |  |  |  |
| 3 | Aperture STO | sphere | infinity | 0.312 |  |  |  |  |
| 4 | Second lens | asphere | 13.868 | 6.092 | glass | 1.619 | 63.855 | 14.447 |
| 5 |  | asphere | -21.079 | 3.462 |  |  |  |  |
| 6 | Third lens | sphere | 13.094 | 4.147 | glass | 1.640 | 60.214 | 13.687 |
| 7 |  | sphere | -23.382 | 0.000 |  |  |  |  |
| 8 | Fourth lens | sphere | -23.382 | 4.952 | glass | 1.755 | 27.547 | -9.672 |
| 9 |  | sphere | 11.694 | 0.729 |  |  |  |  |
| 10 | Fifth lens | sphere | 20.857 | 2.954 | glass | 1.804 | 46.568 | 17.054 |
| 11 |  | sphere | -37.877 | 1.216 |  |  |  |  |
| 12 | Sixth lens | sphere | -7.959 | 0.800 | glass | 1.523 | 58.658 | -15.918 |
| 13 |  | sphere | -176.262 | 0.739 |  |  |  |  |
| 14 | Filter IR | sphere | infinity | 0.400 | glass | 1.517 | 64.212 |  |
| 15 |  | sphere | infinity | 1.773 |  |  |  |  |
| 16 | Protective glass CG | sphere | infinity | 0.500 | glass | 1.517 | 64.212 |  |
| 17 |  | sphere | infinity | 0.045 |  |  |  |  |
| 18 | Imaging plane IMG | sphere | infinity | 0.000 |  |  |  |  |

Table 4

| Surface number | k | A4 | A6 | A8 |
|---|---|---|---|---|
| | Second embodiment | | | |
| | Aspheric coefficient | | | |
| 4 | 2.28743E-02 | -4.73930E-05 | 1.06376E-06 | -6.82920E-08 |
| 5 | -1.31222E-01 | 8.19157E-05 | 1.41465E-06 | -1.04823E-07 |
| Surface number | A10 | A12 | A14 | A16 |
| 4 | 3.40085E-09 | -9.49490E-11 | 1.50685E-12 | -1.02849E-14 |
| 5 | 5.42076E-09 | -1.47358E-10 | 2.12154E-12 | -1.23325E-14 |

Referring to (A) of FIG. 4, (A) of FIG. 4 shows a longitudinal spherical aberration diagram of the optical lens 100 in the second embodiment at wavelengths of 700 nm, 614 nm, 558 nm, 502 nm, 455 nm, and 410 nm. Wherein, the abscissa along the X-axis direction represents the deviation of the focus point in mm, and the ordinate along the Y-axis direction represents the normalized field of view. It can be seen from (A) in Figure 4 that the spherical aberration value of the optical lens 100 in the second embodiment is well, indicating that the imaging quality of the optical lens 100 in this embodiment is well.

Referring to (B) of FIG. 4, (B) of FIG. 4 is an astigmatism curve diagram of the optical lens 100 in the second embodiment at a wavelength of 558 nm. Wherein, the abscissa along the X-axis direction represents the deviation of the focus point in mm, and ordinate along the Y-axis direction represents the image height in mm. T in the astigmatism curve diagram represents the curvature of the image plane IMG in the tangential direction, and S represents the curvature of the image plane IMG in the sagittal direction. It can be seen from (B) of FIG. 4 that at this wavelength, astigmatism of the optical lens 100 is well compensated.

Referring to (C) of FIG. 4, (C) of FIG. 4 is a distortion diagram of the optical lens 100 in the second embodiment at a wavelength of 558 nm. Wherein, the abscissa along the X-axis direction represents the distortion, and the ordinate along the Y-axis direction represents the image height in mm. It can be seen from (C) of FIG. 4 that at this wavelength, the distortion of the optical lens 100 is well corrected.

Third embodiment

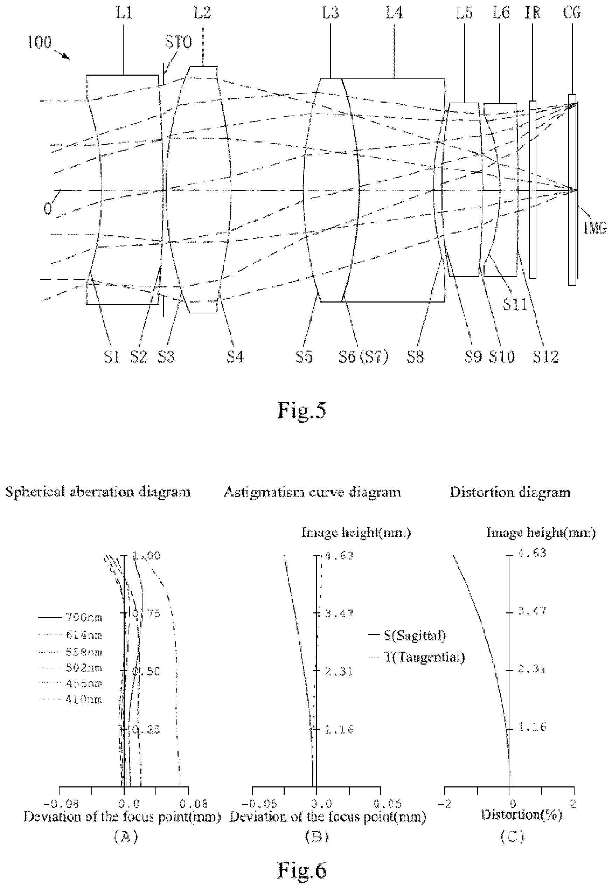

FIG. 5 is a schematic structural diagram of the optical lens 100 of the third embodiment, the optical lens 100 sequentially includes a first lens L1, an aperture STO, a second lens L2, a third lens L3, a fourth lens L4, a fifth lens L5, and a sixth lens L6 along an optical axis O from an object side to an imaging side. The materials of the first lens L1, the second lens L2, the third lens L3, the fourth lens L4, the fifth lens L5, and the sixth lens L6 can be found in Table 3.

Further, the first lens L1 has negative refractive power, the second lens L2 has positive refractive power, third lens L3 has positive refractive power, the fourth lens L4 has negative refractive power, the fifth lens L5 has positive refractive power, and the sixth lens L6 has negative refractive power.

Furthermore, an object side surface S1 of the first lens L1 is concave near the optical axis O, an imaging side surface S2 of the first lens L1 is convex near the optical axis O, an object side surface S3 of the second lens L2 is convex near the optical axis O, an imaging side surface S4 of the second lens L2 is convex near the optical axis O, an object side surface S5 of the third lens L3 is convex near the optical axis O, an imaging side surface S6 of the third lens L3 is convex near the optical axis O, an object side surface S7 of the fourth lens L4 is concave near the optical axis O, an imaging side surface S8 of the fourth lens L4 is concave near the optical axis O, an object side surface S9 of the fifth lens L5 is convex near the optical axis O, an imaging side surface S10 of the fifth lens L5 is convex near the optical axis O, an object side surface S11 of the sixth lens L6 is concave near the optical axis O, and an imaging side surface S12 of the sixth lens L6 is concave near the optical axis O.

Taking a focal length F=15.25mm of the optical lens 100, an aperture number FNO=1.6 of the optical lens 100, the maximum field of view FOV=34.4deg of the optical lens 100, and a total optical length TTL=30.46mm of the optical lens 100 as an example. Other parameters of the third embodiment are given in Table 5 and Table 6, and the definition of each parameter can be obtained from the description of the foregoing embodiment and will not be described again here.

Table 5

| Third embodiment | | | | | | | | |
|---|---|---|---|---|---|---|---|---|
| F=15.25mm, FNO=1.6, FOV=34.4deg, TTL=30.46mm | | | | | | | | |
| Surface number | Name | Surface type | Y radius | Thickness | Material | Refractive index | Abbe number | Focal length |
| | Object side | sphere | infinity | infinity | | | | |
| 1 | First lens | sphere | -13.269 | 3.916 | glass | 1.835 | 42.728 | -20.889 |
| 2 | | sphere | -62.211 | 0.030 | | | | |
| 3 | Aperture STO | sphere | infinity | 0.171 | | | | |
| 4 | Second lens | asphere | 14.037 | 4.162 | glass | 1.619 | 63.855 | 13.305 |
| 5 | | asphere | -17.763 | 4.661 | | | | |

(continued)

| Third embodiment | | | | | | | | |
|---|---|---|---|---|---|---|---|---|
| F=15.25mm, FNO=1.6, FOV=34.4deg, TTL=30.46mm | | | | | | | | |
| Surface number | Name | Surface type | Y radius | Thickness | Material | Refractive index | Abbe number | Focal length |
| | Object side | sphere | infinity | infinity | | | | |
| 6 | Third lens | sphere | 16.453 | 3.573 | glass | 1.755 | 52.337 | 11.395 |
| 7 | | sphere | -16.453 | 0.000 | | | | |
| 8 | Fourth lens | sphere | -16.453 | 4.779 | glass | 1.699 | 30.053 | -9.424 |
| 9 | | sphere | 12.412 | 0.531 | | | | |
| 10 | Fifth lens | sphere | 21.447 | 2.591 | glass | 1.835 | 42.722 | 17.314 |
| 11 | | sphere | -42.382 | 1.157 | | | | |
| 12 | Sixth lens | sphere | -8.297 | 1.130 | glass | 1.620 | 36.348 | -14.262 |
| 13 | | sphere | -132.362 | 0.739 | | | | |
| 14 | Filter IR | sphere | infinity | 0.400 | glass | 1.517 | 64.212 | |
| 15 | | sphere | infinity | 2.075 | | | | |
| 16 | Protective glass CG | sphere | infinity | 0.500 | glass | 1.517 | 64.212 | |
| 17 | | sphere | infinity | 0.045 | | | | |
| 18 | Imaging plane IMG | sphere | infinity | 0.000 | | | | |

Table 6

| Third embodiment | | | | |
|---|---|---|---|---|
| Aspheric coefficient | | | | |
| Surface number | k | A4 | A6 | A8 |
| 4 | -2.68751E-01 | -7.81867E-05 | 2.01399E-06 | -1.33176E-07 |
| 5 | 2.59404E-01 | 7.48027E-05 | 3.01602E-06 | -2.45419E-07 |
| Surface number | A10 | A12 | A14 | A16 |
| 4 | 6.02816E-09 | -1.45776E-10 | 1.85083E-12 | -8.75593E-15 |
| 5 | 1.22388E-08 | -3.35644E-10 | 4.87945E-12 | -2.82013E-14 |

Referring to FIG. 6, it can be seen from (A) a longitudinal spherical aberration diagram, (B) an astigmatism curve diagram, and (C) a distortion diagram in FIG. 6 that, the spherical aberration value, astigmatism, and distortion of the optical lens 100 of the third embodiment are well controlled, so that the optical lens 100 of this embodiment has a good imaging quality. In addition, regarding the wavelengths corresponding to the curves in (A) in Figure 6, (B) in Figure 6, and (C) in Figure 6, please refer to the contents described in (A) in Figure 4, (B) in Figure 4, and (C) in Figure 4 in the second embodiment and will not be described again here.

Fourth embodiment

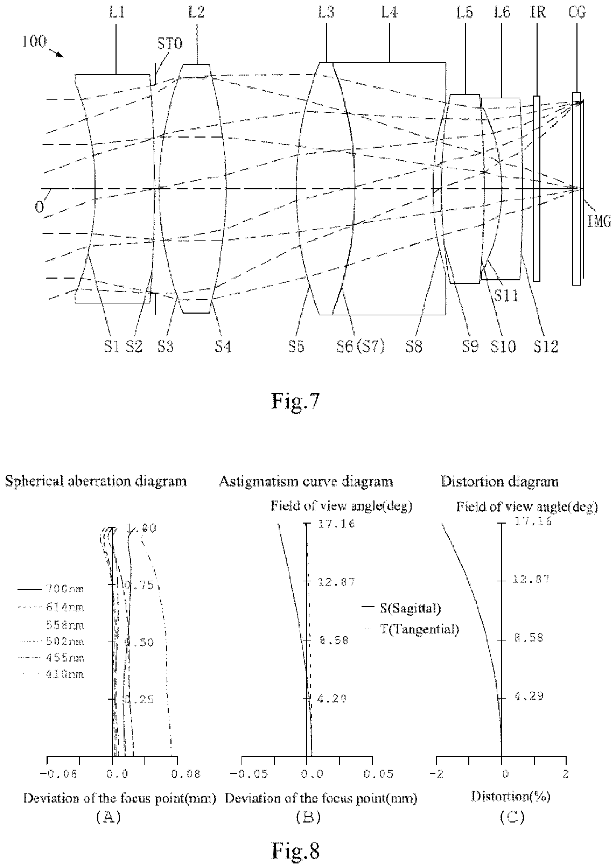

FIG. 7 is a schematic structural diagram of the optical lens 100 of the fourth embodiment, the optical lens 100 sequentially includes a first lens L1, an aperture STO, a second lens L2, a third lens L3, a fourth lens L4, a fifth lens L5, and a sixth lens L6 along an optical axis O from an object side to an imaging side. The materials of the first lens L1, the second lens L2, the third lens L3, the fourth lens L4, the fifth lens L5, and the sixth lens L6 can be found in Table 3.
Further, the first lens L1 has negative refractive power, the second lens L2 has positive refractive power, third lens L3 has positive refractive power, the fourth lens L4 has negative refractive power, the fifth lens L5 has positive refractive power, and the sixth lens L6 has negative refractive power.

Furthermore, an object side surface S1 of the first lens L1 is concave near the optical axis O, an imaging side surface S2 of the first lens L1 is convex near the optical axis O, an object side surface S3 of the second lens L2 is convex near the optical axis O, an imaging side surface S4 of the second lens L2 is convex near the optical axis O, an object side surface S5 of the third lens L3 is convex near the optical axis O, an imaging side surface S6 of the third lens L3 is convex near the optical axis O, an object side surface S7 of the fourth lens L4 is concave near the optical axis O, an imaging side surface S8 of the fourth lens L4 is concave near the optical axis O, an object side surface S9 of the fifth lens L5 is convex near the optical axis O, an imaging side surface S10 of the fifth lens L5 is convex near the optical axis O, an object side surface S11 of the sixth lens L6 is concave near the optical axis O, and an imaging side surface S12 of the sixth lens L6 is concave near the optical axis O.

Taking a focal length F=15.25mm of the optical lens 100, an aperture number FNO=1.6 of the optical lens 100, the maximum field of view FOV=34.32deg of the optical lens 100, and a total optical length TTL=30.596mm of the optical lens 100 as an example. Other parameters of the fourth embodiment are given in Table 7 and Table 8, and the definition of each parameter can be obtained from the description of the foregoing embodiment and will not be described again here.

Table 3

| Fourth embodiment | | | | | | | | |
|---|---|---|---|---|---|---|---|---|
| F=15.25mm, FNO=1.6, FOV=34.32deg, TTL=30.596mm | | | | | | | | |
| Surface number | Name | Surface type | Y radius | Thickness | Material | Refractive index | Abbe number | Focal length |
| | Object side | sphere | infinity | infinity | | | | |
| 1 | First lens | sphere | -13.221 | 3.720 | glass | 1.835 | 42.728 | -20.529 |
| 2 | | sphere | -64.446 | 0.030 | | | | |
| 3 | Aperture STO | sphere | infinity | 0.267 | | | | |
| 4 | Second lens | asphere | 14.154 | 4.190 | glass | 1.619 | 63.855 | 13.411 |
| 5 | | asphere | -17.897 | 4.404 | | | | |
| 6 | Third lens | sphere | 16.123 | 3.684 | glass | 1.755 | 52.337 | 11.195 |
| 7 | | sphere | -16.123 | 0.000 | | | | |
| 8 | Fourth lens | sphere | -16.123 | 4.897 | glass | 1.689 | 31.161 | -9.663 |
| 9 | | sphere | 12.861 | 0.508 | | | | |
| 10 | Fifth lens | sphere | 21.974 | 2.678 | glass | 1.835 | 42.722 | 18.030 |
| 11 | | sphere | -45.678 | 1.117 | | | | |
| 12 | Sixth lens | sphere | -8.300 | 1.300 | glass | 1.689 | 31.161 | -13.571 |
| 13 | | sphere | -75.580 | 0.676 | | | | |
| 14 | Filter IR | sphere | infinity | 0.400 | glass | 1.517 | 64.212 | |
| 15 | | sphere | infinity | 2.075 | | | | |
| 16 | Protective glass CG | sphere | infinity | 0.500 | glass | 1.517 | 64.212 | |
| 17 | | sphere | infinity | 0.150 | | | | |
| 18 | Imaging plane IMG | sphere | infinity | 0.000 | | | | |

Table 8

| Fourth embodiment | | | |
|---|---|---|---|
| Aspheric coefficient | | | |
| Surface number | k | A4 | A6 | A8 |
| 4 | -2.73221E-01 | -7.86282E-05 | 2.01636E-06 | -1.33287E-07 |

(continued)

| Fourth embodiment | | | |
|---|---|---|---|
| Aspheric coefficient | | | |
| Surface number | k | A4 | A6 | A8 |
| 5 | 4.20912E-01 | 7.40225E-05 | 3.01835E-06 | -2.45018E-07 |
| Surface number | A10 | A12 | A14 | A16 |
| 4 | 5.97712E-09 | -1.51361E-10 | 2.17069E-12 | -1.33439E-14 |
| 5 | 1.21804E-08 | -3.39889E-10 | 5.14644E-12 | -3.21747E-14 |

Referring to (A) of FIG. 8, (A) of FIG. 8 shows a longitudinal spherical aberration diagram of the optical lens 100 in the fourth embodiment at wavelengths of 700 nm, 614 nm, 558 nm, 502 nm, 455 nm, and 410 nm. Wherein, the abscissa along the X-axis direction represents the deviation of the focus point in mm, and the ordinate along the Y-axis direction represents the normalized field of view. It can be seen from (A) in Figure 8 that the spherical aberration value of the optical lens 100 in the fourth embodiment is well, indicating that the imaging quality of the optical lens 100 in this embodiment is well.

Referring to (B) of FIG. 8, (B) of FIG. 8 is an astigmatism curve diagram of the optical lens 100 in the fourth embodiment at a wavelength of 558 nm. Wherein, the abscissa along the X-axis direction represents the deviation of the focus point in mm, and ordinate along the Y-axis direction represents the field of view angle in deg. T in the astigmatism curve diagram represents the curvature of the image plane IMG in the tangential direction, and S represents the curvature of the image plane IMG in the sagittal direction. It can be seen from (B) of FIG. 8 that at this wavelength, astigmatism of the optical lens 100 is well compensated.

Referring to (C) of FIG. 8, (C) of FIG. 8 is a distortion diagram of the optical lens 100 in the fourth embodiment at a wavelength of 558 nm. Wherein, the abscissa along the X-axis direction represents the distortion, and the ordinate along the Y-axis direction represents the field of view angle in deg. It can be seen from (C) of FIG. 8 that at this wavelength, the distortion of the optical lens 100 is well corrected.

Fifth embodiment

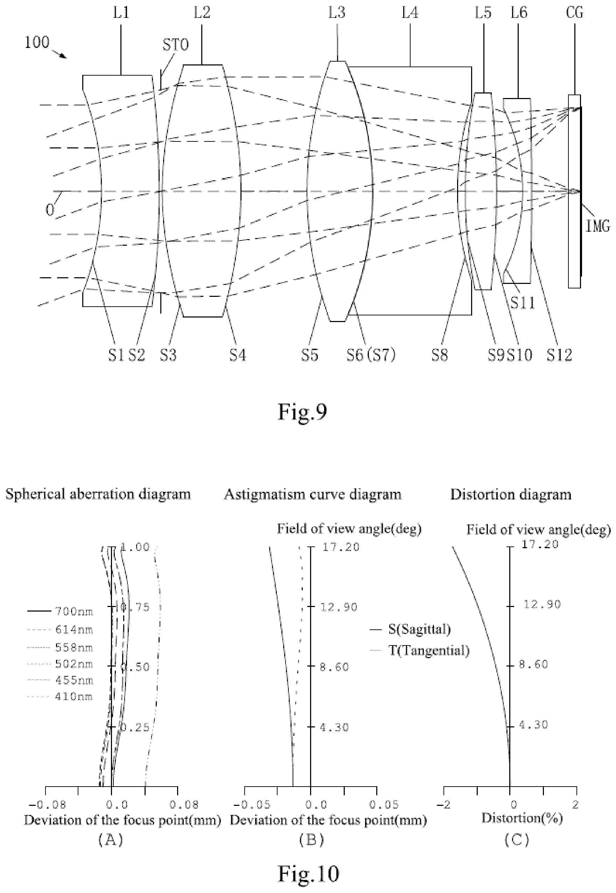

FIG. 9 is a schematic structural diagram of the optical lens 100 of the fifth embodiment, the optical lens 100 sequentially includes a first lens L1, an aperture STO, a second lens L2, a third lens L3, a fourth lens L4, a fifth lens L5, and a sixth lens L6 along an optical axis O from an object side to an imaging side. The materials of the first lens L1, the second lens L2, the third lens L3, the fourth lens L4, the fifth lens L5, and the sixth lens L6 can be found in Table 3.

Further, the first lens L1 has negative refractive power, the second lens L2 has positive refractive power, third lens L3 has positive refractive power, the fourth lens L4 has negative refractive power, the fifth lens L5 has positive refractive power, and the sixth lens L6 has negative refractive power.

Furthermore, an object side surface S1 of the first lens L1 is concave near the optical axis O, an imaging side surface S2 of the first lens L1 is convex near the optical axis O, an object side surface S3 of the second lens L2 is convex near the optical axis O, an imaging side surface S4 of the second lens L2 is convex near the optical axis O, an object side surface S5 of the third lens L3 is convex near the optical axis O, an imaging side surface S6 of the third lens L3 is convex near the optical axis O, an object side surface S7 of the fourth lens L4 is concave near the optical axis O, an imaging side surface S8 of the fourth lens L4 is concave near the optical axis O, an object side surface S9 of the fifth lens L5 is convex near the optical axis O, an imaging side surface S10 of the fifth lens L5 is convex near the optical axis O, an object side surface S11 of the sixth lens L6 is concave near the optical axis O, and an imaging side surface S12 of the sixth lens L6 is concave near the optical axis O.

Taking a focal length F=15.23mm of the optical lens 100, an aperture number FNO=1.6 of the optical lens 100, the maximum field of view FOV=34.32deg of the optical lens 100, and a total optical length TTL=31.771mm of the optical lens 100 as an example. Other parameters of the fifth embodiment are given in Table 9 and Table 10, and the definition of each parameter can be obtained from the description of the foregoing embodiment and will not be described again here.

Table 9

| Fifth embodiment | | | | | | | | |
|---|---|---|---|---|---|---|---|---|
| F=15.23mm, FNO=1.6, FOV=34.32deg, TTL=31.771mm | | | | | | | | |
| Surface number | Name | Surface type | Y radius | Thickness | Material | Refractive index | Abbe number | Focal length |
| | Object side | sphere | infinity | infinity | | | | |
| 1 | First lens | sphere | -13.228 | 3.817 | glass | 1.804 | 46.568 | -25.134 |
| 2 | | sphere | -42.827 | 0.104 | | | | |
| 3 | Aperture STO | sphere | infinity | 0.102 | | | | |
| 4 | Second lens | asphere | 16.124 | 5.198 | glass | 1.619 | 63.855 | 14.709 |
| 5 | | asphere | -18.477 | 4.380 | | | | |
| 6 | Third lens | sphere | 17.546 | 4.348 | glass | 1.755 | 52.337 | 11.289 |
| 7 | | sphere | -14.935 | 0.000 | | | | |
| 8 | Fourth lens | sphere | -14.935 | 5.611 | glass | 1.741 | 27.762 | -8.726 |
| 9 | | sphere | 13.427 | 0.507 | | | | |
| 10 | Fifth lens | sphere | 23.206 | 2.077 | glass | 1.834 | 37.229 | 17.785 |
| 11 | | sphere | -40.129 | 1.721 | | | | |
| 12 | Sixth lens | sphere | -8.793 | 0.603 | glass | 1.613 | 44.167 | -15.146 |
| 13 | | sphere | -153.92 | 2.408 | | | | |
| 14 | Protective glass CG | sphere | infinity | 0.850 | glass | 1.517 | 64.212 | |
| 15 | | sphere | infinity | 0.045 | | | | |
| 16 | Imaging plane IMG | sphere | infinity | 0.000 | | | | |

Table 10

| Fifth embodiment | | | |
|---|---|---|---|
| Aspheric coefficient | | | |
| Surface number | k | A4 | A6 | A8 |
| 4 | 3.06187E-01 | -7.95977E-05 | 1.82430E-06 | -1.85874E-07 |
| 5 | -1.58642E+00 | 3.01748E-05 | 3.29659E-07 | -6.14038E-08 |
| Surface number | A10 | A12 | A14 | A16 |
| 4 | 1.05684E-08 | -3.42281E-10 | 5.86166E-12 | -4.12912E-14 |
| 5 | 4.37567E-09 | -1.63046E-10 | 3.05613E-12 | -2.28120E-14 |

Referring to FIG. 10, it can be seen from (A) a longitudinal spherical aberration diagram, (B) an astigmatism curve diagram, and (C) a distortion diagram in FIG. 10 that, the spherical aberration value, astigmatism, and distortion of the optical lens 100 of the fifth embodiment are well controlled, so that the optical lens 100 of this embodiment has a good imaging quality. In addition, regarding the wavelengths corresponding to the curves in (A) in Figure 10, (B) in Figure 10, and (C) in Figure 10, please refer to the contents described in (A) in Figure 8, (B) in Figure 8, and (C) in Figure 8 in the fourth embodiment and will not be described again here.

Referring to Table 11, Table 11 is a summary of the ratios of each relational expression in the first to fifth embodiments of the present disclosure.

Table 11

| Relational expression/Embodiment | First embodiment | Second embodiment | Third embodiment | Fourth embodiment | Fifth embodiment |
|---|---|---|---|---|---|
| 6.5<TTL/IMGH<7.2 | 7.149 | 7.169 | 6.585 | 6.614 | 6.868 |
| 1.9<TTL/F<2.2 | 2.168 | 2.176 | 1.997 | 2.006 | 2.086 |
| 0.5<CT23/CT2<1.2 | 0.799 | 0.568 | 1.12 | 1.051 | 0.843 |
| 0.8<CT56/CT6<3 | 1.2 | 1.52 | 1.024 | 0.859 | 2.854 |
| 1.5 < CT2/ET2 < 2.1 | 1.595 | 1.535 | 2.081 | 2.095 | 1.661 |
| 5<SD3/(SAG3-SAG4)<40 | 31.5 | 9.683 | 17.029 | 18.182 | 37.059 |
| **1.4** < F/F2345 < 1.8 | 1.597 | 1.478 | 1.716 | 1.749 | 1.600 |
| 5<IF34/FI<35 | 27.775 | 15.734 | 11.881 | 6.596 | 31.87 |
| 5mm<F6*BFL/R11<7mm | 5.548 | 6.914 | 6.461 | 6.215 | 5.689 |
| 1.1<CT4/CT3<1.9 | 1.834 | 1.194 | 1.338 | 1.329 | 1.29 |
| 20<VD3-VD4<35 | 24.575 | 32.667 | 22.284 | 21.176 | 24.575 |
| $0.2\ mm*10^{-6}/°C<(CT3-CT4)*(TCE3-TCE4)<0.8\ mm*10^{-6}/°C$ | 0.774 | 0.298 | 0.365 | 0.357 | 0.332 |
| 1<SD9/SD11<1.1 | 1.042 | 1.033 | 1.005 | 1.036 | 1.065 |
| -2.6<SAG11/SAG9<-2.2 | -2.339 | -2.496 | -2.448 | -2.438 | -2.391 |
| 1<SD1/IMGH<1.3 | 1.189 | 1.189 | 1.081 | 1.146 | 1.211 |
| 15mm<SD1/TAN(HFOV)-SAG1<17.5mm | 17.309 | 16.114 | 15.222 | 16.065 | 16.907 |
| 2.5<R2/R1<5 | 2.803 | 4.318 | 4.688 | 4.875 | 3.238 |
| -2<R4/R3<-1 | -1.320 | -1.520 | -1.265 | -1.264 | -1.146 |
| -2<R6/R5<-0.5 | -1 | -1.786 | -1 | -1 | -0.851 |
| -2<R7/R8<-1 | -1.421 | -1.999 | -1.326 | -1.254 | -1.112 |
| -2.2<R10/R9<-1.5 | -1.675 | -1.816 | -1.976 | -2.079 | -1.729 |
| R12/R11<30 | 23.225 | 22.146 | 15.953 | 9.106 | 17.505 |
| 30deg<FOV<40deg | 33.2 | 35.4 | 34.4 | 34.32 | 34.32 |
| 1.5<FNO<1.7 | 1.6 | 1.58 | 1.64 | 1.62 | 1.59 |
| -7<F1/CT1<-4.5 | -6.064 | -4.843 | -5.334 | -5.519 | -6.585 |
| 2<F2/CT2<3.5 | 2.821 | 2.371 | 3.197 | 3.201 | 2.830 |
| 2.5<F3/CT3<4 | 3.675 | 3.300 | 3.189 | 3.039 | 2.596 |
| -2<F4/CT4<-1 | -1.487 | -1.953 | -1.972 | -1.973 | -1.555 |
| 5<F5/CT5<9 | 6.232 | 5.773 | 6.682 | 6.733 | 8.563 |
| -30<F6/CT6<-10 | -17.615 | -19.898 | -12.621 | -10.439 | -25.118 |

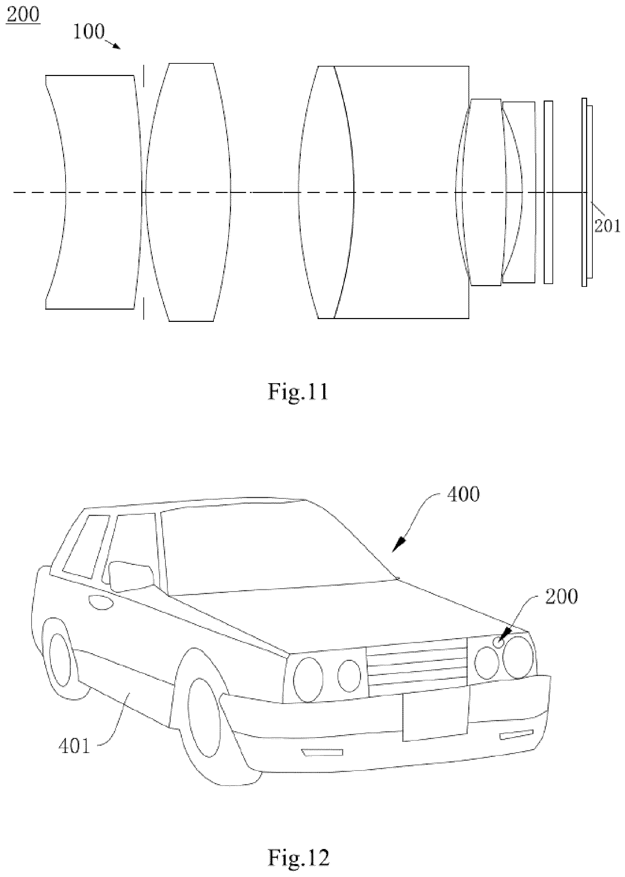

Referring to FIG. 11, the present disclosure also discloses an image module 200. The image module 200 includes an image sensor 201 and the above-mentioned optical lens 100 selected from the first to fifth embodiments. The image sensor 201 is arranged on the imaging side of the optical lens 100. The optical lens 100 can be used to receive light signal of the object being photographed and project it to the image sensor 201, and the image sensor 201 can be used to convert the light signal corresponding to the object being photographed into an image signal and it will not be described again here. It can be understood that the image module 200 with the above-mentioned optical lens 100 can improve the imaging quality while realizing the miniaturization design.

Referring to FIG. 12, the present disclosure also discloses a terminal device 400. The terminal device 400 includes a housing 401 and the above-mentioned image module 200. The image module 200 is arranged in the housing 401. The terminal device 400 may be, but is not limited to, a mobile phone, a tablet, a laptop, a smart watch, a monitor, a driving recorder, or a reversing image. It can be understood that the terminal device 400 with the above-mentioned image module 200 also has all the technical effects of the above-mentioned optical lens. That is, the terminal device 400 can improve the imaging quality while realizing the miniaturization design.

It should be understood that in various embodiments of the application, the sequence number of the above processes does not imply the order of execution, and the order of execution of each process shall be determined by its function and internal logic, and shall not constitute any limitation on the implementation process of the embodiments of the application.

The above embodiments are used only to illustrate the technical scheme of the application and not to limit it. Notwithstanding the detailed description of the application by reference to the foregoing embodiments, it should be understood by persons of ordinary skill in the art that the technical scheme recorded in the foregoing embodiments may be modified or equivalent to some of the technical features thereof, and such modification or replacement shall not remove the essence of the corresponding technical scheme from the scope of the technical scheme of each embodiment of the application.

**Claims**

1. An optical lens (100), from an object side to an imaging side along an optical axis (O), sequentially comprising:

   a first lens (L1) having negative refractive power, an object side surface (S1) of the first lens (L1) being concave near the optical axis (O), and an imaging side surface (S2) of the first lens (L1) being convex near the optical axis (O);
   a second lens (L2) having positive refractive power, an object side surface (S3) of the second lens (L2) being convex near the optical axis (O), and an imaging side surface (S4) of the second lens (L2) being convex near the optical axis (O);
   a third lens (L3) having positive refractive power, an object side surface (S5) of the third lens (L3) being convex near the optical axis (O), an imaging side surface (S6) of the third lens (L3) being convex near the optical axis (O);
   a fourth lens (L4) having negative refractive power, an object side surface (S7) of the fourth lens (L4) being concave near the optical axis (O), an imaging side surface (S8) of the fourth lens (L4) being concave near the optical axis (O);
   a fifth lens (L5) having positive refractive power, an object side surface (S9) of the fifth lens (L5) being convex near the optical axis (O), an imaging side surface (S10) of the fifth lens (L5) being convex near the optical axis (O);
   a sixth lens (L6) having negative refractive power, an object side surface (S11) of the sixth lens (L6) being concave near the optical axis (O), an imaging side surface (S12) of the sixth lens (L6) being concave near the optical axis (O); and
   an image plane (IMG);
   the optical lens (100) satisfying following conditional expressions:

   $$6.5 < TTL/IMGH < 7.2, \text{ and } 1.9 < TTL/F < 2.2;$$

   wherein, TTL is a distance from the object side surface (S1) of the first lens (L1) to the image plane (IMG) of the optical lens (100) along the optical axis (O), IMGH is half of an image height corresponding to the maximum field of view of the optical lens (100), and F is a focal length of the optical lens (100).

2. The optical lens (100) of claim 1, wherein the optical lens (100) further satisfies at least one of following conditional expressions:

   $$0.5 < CT23/CT2 < 1.2 \text{ and } 0.8 < CT56/CT6 < 3;$$

   wherein, CT2 is a thickness of the second lens (L2) at the optical axis (O), CT23 is a distance between the second lens (L2) and the third lens (L3) at the optical axis (O), CT6 is a thickness of the sixth lens (L6) at the optical axis (O), and CT56 is a distance between the fifth lens (L5) and the sixth lens (L6) at the optical axis (O).

3. The optical lens (100) of claim 1, wherein the optical lens (100) further satisfies at least one of following conditional

expressions:

$$1.5 < CT2/ET2 < 2.1 \text{ and } 5 < SD3/(SAG3-SAG4) < 40;$$

wherein, CT2 is a thickness of the second lens (L2) at the optical axis (O), and ET2 is a thickness of an edge of the second lens (L2), SD3 is half of the maximum effective aperture of the object side surface (S3) of the second lens (L2), SAG3 is a vector height at the maximum effective aperture of the object side surface (S3) of the second lens (L2), SAG4 is a vector height at the maximum effective aperture of the imaging side surface (S4) of the second lens (L2).

4. The optical lens (100) of claim 1, wherein the optical lens (100) further satisfies at least one of following conditional expressions:

$$1.4 < F/F2345 < 1.8, \ 5 < |F34/F| < 35, \text{ and } 5mm < F6*BFL/R11 < 7mm;$$

wherein, F2345 is a combined focal length of the second lens (L2), the third lens (L3), the fourth lens (L4) and the fifth lens (L5), F34 is a combined focal length of the third lens (L3) and the fourth lens (L4), F6 is a focal length of the sixth lens (L6), BFL is a distance between the imaging side surface (S12) of the sixth lens (L6) and the image plane (IMG) of the optical lens (100) at the optical axis (O), and R11 is a radius of curvature of the object side surface (S11) of the sixth lens (L6) at the optical axis (O).

5. The optical lens (100) of claim 1, wherein the optical lens (100) further satisfies at least one of following conditional expressions:

$$1.1 < CT4/CT3 < 1.9, \ 20 < VD3-VD4 < 35, \text{ and } 0.2 \ mm*10^{-6}/°C < (CT3-CT4)*(TCE3-TCE4) < 0.8 \ mm*10^{-6}/°C;$$

wherein, CT3 is a thickness of the third lens (L3) at the optical axis (O), CT4 is a thickness of the fourth lens (L4) at the optical axis (O), VD3 is an Abbe number of the third lens (L3), VD4 is an Abbe number of the fourth lens (L4), TCE3 is a coefficient of thermal expansion of the third lens (L3), and TCE4 is a coefficient of thermal expansion of the fourth lens (L4).

6. The optical lens (100) of claim 1, wherein the optical lens (100) further satisfies at least one of following conditional expressions:

$$1 < SD9/SD11 < 1.1, \text{ and } -2.6 < SAG11/SAG9 < -2.2;$$

wherein, SD9 is half of the maximum effective aperture of the object side surface (S9) of the fifth lens (L5), SD11 is half of the maximum effective aperture of the object side surface (S11) of the sixth lens (L6), SAG9 is a vector height at the maximum effective aperture of the object side surface (S9) of the fifth lens (L5), and SAG11 is a vector height at the maximum effective aperture of the object side surface (S11) of the sixth lens (L6) .

7. The optical lens (100) of claim 1, wherein the optical lens (100) further satisfies at least one of following conditional expressions:

$$1 < SD1/IMGH < 1.3, \text{ and } 15mm < SD1/TAN(FOV/2)-SAG1 < 17.5mm;$$

wherein, SD1 is half of the maximum effective aperture of the object side surface (S1) of the first lens (L1), FOV is the maximum field of view of the optical lens (100), SAG1 is a vector height at the maximum effective aperture of the object side surface (S1) of the first lens (L1).

8. The optical lens (100) of claim 1, wherein the optical lens (100) further satisfies at least one of following conditional expressions:

$$-2<R6/R5<-0.5, -2<R7/R8<-1, \text{ and } R12/R11<30;$$

wherein, R5 is a radius of curvature of the object surface (S5) of the third lens (L3) at the optical axis (O), R5 is a radius of curvature of the imaging side surface (S6) of the third lens (L3) at the optical axis (O), R7 is a radius of curvature of the object surface (S7) of the fourth lens (L4) at the optical axis (O), R8 is a radius of curvature of the imaging side surface (S8) of the fourth lens (L4) at the optical axis (O), R11 is a radius of curvature of the object surface (S11) of the sixth lens (L6) at the optical axis (O), R12 is a radius of curvature of the imaging side surface (S12) of the sixth lens (L6) at the optical axis (O).

9. An image module (200) comprising an image sensor (201) and the optical lens (100) of any one of claims 1 to 8, the image sensor (201) is arranged on the imaging side of the optical lens (100).

10. A terminal device (400) comprising a fixing member (401) and the image module (200) of claim 9, the image module (200) being arranged on the fixing member (401).

Fig.1

Spherical aberration diagram    Astigmatism curve diagram    Distortion diagram

Fig.2

Fig.3

Spherical aberration diagram    Astigmatism curve diagram    Distortion diagram

Deviation of the focus point(mm)   Deviation of the focus point(mm)   Distortion(%)
(A)                                (B)                                (C)

Fig.4

Fig.5

Spherical aberration diagram    Astigmatism curve diagram    Distortion diagram

(A)    (B)    (C)

Fig.6

Fig.7

Spherical aberration diagram
Astigmatism curve diagram
Distortion diagram

Field of view angle(deg)
Field of view angle(deg)

Deviation of the focus point(mm)    Deviation of the focus point(mm)    Distortion(%)
(A)                                 (B)                                 (C)

Fig.8

100

L1    L2    L3    L4    L5  L6  CG

STO

0

IMG

S11

S1 S2  S3    S4    S5    S6 (S7)    S8    S9 S10  S12

## Fig.9

Spherical aberration diagram    Astigmatism curve diagram    Distortion diagram

Field of view angle(deg)    Field of view angle(deg)

1.00    17.20    17.20

——— 700nm
------ 614nm
······· 558nm
·-·-· 502nm
—·— 455nm
······ 410nm

0.75    12.90    12.90

— S(Sagittal)
···· T(Tangential)

0.50    8.60    8.60

0.25    4.30    4.30

−0.08    0.0    0.08    −0.05    0.0    0.05    −2    0    2
Deviation of the focus point(mm)  Deviation of the focus point(mm)    Distortion(%)
(A)    (B)    (C)

## Fig.10

Fig.11

Fig.12